# EUROPEAN PATENT APPLICATION

(11) **EP 3 982 437 A1**
(43) Date of publication of application: **13.04.2022**
(21) Application number: 20807252.0
(22) Date of filing: 29.07.2020
(51) Int. Cl.: H01M 2/10

(54) **BATTERY PACK AND DEVICE USING BATTERY PACK**

(30) Priority: 08.08.2019 CN 201910730769
(71) Applicant: Contemporary Amperex Technology Co., Limited, Fujian PRC 352100 (CN)
(72) Inventor: CAI, Shengtian, Ningde City Fujian PRC 352100 (CN); QIAN, Mu, Ningde City Fujian PRC 352100 (CN); YAO, Jihua, Ningde City Fujian PRC 352100 (CN); HUANG, Yangzhi, Ningde City Fujian PRC 352100 (CN); LIU, Cunrui, Ningde City Fujian PRC 352100 (CN); YU, Jieguang, Ningde City Fujian PRC 352100 (CN)
(74) Representative: Barker Brettell LLP
(86) International application number: PCT/CN2020/105512
(87) International publication number: WO 2021/023079

(57) **Abstract**

The embodiments of this disclosure provides a battery pack and a device using the battery pack. The battery pack includes: a battery module, including a plurality of secondary batteries and a module frame disposed on an outer periphery of the plurality of secondary batteries, wherein a lug is provided on a surface of the module frame away from the secondary batteries; and a fixing casing, comprising two fixing beams which are spaced apart and a limiting space which is located between the two fixing beams and used to accommodate the battery module, wherein a plurality of limiting holes which are spaced apart is provided on at least one of the fixing beams, and a clamping mechanism is disposed within the limiting hole to fix the lug between the clamping mechanism and the fixing beam. When the battery module is located within the limiting space, the lug on the module frame is fixed by a plurality of clamping mechanisms, and the plurality of clamping mechanisms are spaced apart, so the clamping operations among the plurality of clamping mechanisms will not be affected each other, facilitating the plurality of clamping mechanisms to fix different positions of the lug respectively; therefore the fixing effect of the clamping mechanism can be effectively improved, and the structural strength of the entire battery pack can be improved.

## Description

### CROSS-REFERENCE TO RELATED APPLICATION

This application claims the priority to the Chinese patent application No. 201910730769.1, entitled "BATTERY PACK" and filed on August 8, 2019, the entirety of which is incorporated herein by reference.

### TECHNICAL FIELD

This disclosure relates to the technical field of energy storage apparatus, and in particular to a battery pack and a device using the battery pack.

### BACKGROUND

In order to improve energy density and volume utilization of a battery pack, more and more enterprises are now prone to design a large-scale module including a plurality of secondary batteries. However, the existing fixing manner cannot ensure the stability of structure of the large-scale module.

Therefore, there is an urgent need for a novel battery pack and a device using the battery pack.

### SUMMARY

This disclosure provides a battery pack and a device using the battery pack, aiming to improve the structural strength of the battery pack.

An embodiment of a first aspect of this disclosure provides a battery pack, including: a battery module, including a plurality of secondary batteries and a module frame disposed on an outer periphery of the plurality of secondary batteries, wherein a lug is provided on a surface of the module frame away from the secondary batteries; and a fixing casing, including two fixing beams which are spaced apart and a limiting space which is located between the two fixing beams and used to accommodate the battery module, wherein a plurality of limiting holes which are spaced apart are provided on at least one of the fixing beams, and a clamping mechanism is disposed within the limiting hole to fix the lug between the clamping mechanism and the fixing beam.

According to an embodiment of the first aspect of this disclosure, the clamping mechanism includes: a fixing bracket, including side walls disposed oppositely along a length direction of the clamping mechanism, a bottom wall connected between two adjacent side walls, and a buckle space located between the two adjacent side walls, wherein a first buckle portion is provided on an outer surface of the side wall facing away from the buckle space, so that the fixing bracket is clamped to the limiting hole by the first buckle portion, and second buckle portions which are spaced apart are provided within the buckle space; and a lifting bracket, including a buckle wall, the lifting bracket being clamped between two second buckle portions by the buckle wall.

Optionally, a stop portion is provided at a free end of the second buckle portion away from the bottom wall, and a distance from the stop portion to the bottom wall is greater than an extension thickness of the buckle wall along a height direction of the clamping mechanism, so that the lifting bracket is disposed to be movable along the height direction.

Optionally, the second buckle portion and the side wall are spaced apart.

Optionally, a receding hole is provided on the bottom wall, and the second buckle portion is disposed on a side of the receding hole close to the side wall.

Optionally, the side wall includes a main body portion and an elastic portion which are spaced apart in the length direction and a connecting portion which connects the main body portion and the elastic portion, the main body portion is connected to the bottom wall, and the first buckle portion is disposed on an outer surface of the elastic portion facing away from the main body portion.

Optionally, two first buckle portions are disposed outside the same side wall, and the two first buckle portions are spaced apart along a width direction of the battery pack outside the same side wall, so that a portion of the fixing beam on the peripheral side of the limiting hole is limited to be located between the two first buckle portions.

Optionally, of the two first buckle portions disposed outside the same side wall, the first buckle portion disposed at a suspended end of the elastic portion includes a first guide surface.

Optionally, a limiting portion is provided on an outer surface of the bottom wall facing away from the buckle space, so as to provide a limiting force to the fixing bracket located within the limiting hole by the limiting portion.

Optionally, the number of the limiting portion is two, and two limiting portions are spaced apart along a width direction of the battery pack, so that at least portion of the fixing beam on the peripheral side of the limiting hole is limited to be located between the two limiting portions.

Optionally, buckle grooves are provided on two sides of the buckle wall in the length direction, and the buckle wall is clamped between the two second buckle portions by the buckle grooves.

Optionally, the lifting bracket includes a first wall portion and a second wall portion which are respectively connected to on two opposite sides of the buckle wall in a width direction of the clamping mechanism; an end of the first wall portion away from the buckle wall is further connected with a first pressing arm, and the first pressing arm is formed by extending from the first wall portion in a direction away from the second wall portion; and/or, an end of the second wall portion away from the buckle wall is further connected with a second pressing arm, and the second pressing arm is formed by extending from the second wall portion in a direction away from away from the first wall portion.

Optionally, the fixing beam provided with the clamping mechanism includes a pressing beam and a supporting plate which are successively arranged in a height direction of the clamping mechanism, the limiting holes are disposed on the supporting plate, and in a width direction of the clamping mechanism, an extension distance of the pressing beam is greater than an extension thickness of the support plate, so as to fix the lug between the pressing beam and the lifting bracket; and the buckle wall is provided with a first adjusting hole penetrating therethrough, and the pressing beam is provided with a second adjusting hole disposed at a position corresponding to the limiting hole, so that an adjusting column can pass through the first adjusting hole and the second adjusting hole and adjust the relative position of the lifting bracket and the fixing bracket.

Optionally, the buckle wall is provided with a first adjusting hole penetrating therethrough, and the pressing beam is provided with a second adjusting hole disposed at a position corresponding to the limiting hole, so that an adjusting column can pass through the first adjusting hole and the second adjusting hole and adjust the relative position of the lifting bracket and the fixing bracket.

Optionally, the bottom wall is provided with a third adjusting hole penetrating therethrough, the third adjusting hole is disposed at a position corresponding to the first adjusting hole, so that the adjusting column can also pass through the third adjusting hole.

Optionally, the side wall is provided with a spacer which limits a position of the second buckle portion, and the spacer is disposed between the side wall and the second buckle portion.

According to an embodiment of the first aspect of this disclosure, the module frame includes two side plates which are spaced apart, the secondary batteries are located between the two side plates, and the lug is disposed on an outer surface of at least one of the side plates that is facing away from the secondary batteries.

Optionally, the module frame further includes two end plates, the side plate includes a main plate body and connecting plate bodies located at two ends of the main plate body, and the main plate body is connected to the end plates by the connecting plate bodies, and the lug is disposed on the main plate body; and the main plate body includes a first sub-portion and a second sub-portion which are separately disposed along a height direction of the battery pack, the first sub-portion includes a first main plate and a second connecting plate which intersect with each other, the second sub-portion includes a second main plate and a second connecting plate which intersect with each other, and the first connecting plate and the second connecting plate overlap each other to form the lug.

According to an embodiment of the first aspect of this disclosure, at least two lugs are disposed outside the module frame; the two fixing beams are a first fixing beam and a second fixing beam respectively, and the clamping mechanism is disposed on the first fixing beam; the second fixing beam includes a first clamping beam and a second clamping beam which are successively arranged along a height direction of the battery pack, so as to fix at least one of the lugs between the first clamping beam and the second clamping beam.

Optionally, the first fixing beam includes a pressing beam and a support plate which are successively arranged in the height direction of the battery pack, and the limiting holes are disposed on the support plate, an extension distance of the pressing beam in a width direction of the battery pack is greater than an extension thickness of the support plate in the width direction, so as to form a pressing surface on a wall portion of the pressing beam facing the support plate, and the lug is fixed between the clamping mechanism and the pressing surface.

Optionally, the fixing casing further includes two fixing plates which are oppositely disposed along a length direction of the battery pack, the two fixing plates and the two fixing beams are alternately disposed and connected with each other along a circumferential direction of the fixing casing to enclose a limiting space.

A second aspect of this disclosure provides a device using a battery pack, including the battery pack according to the first aspect.

In the battery pack according to embodiments of this disclosure, the battery pack includes the battery module and the fixing casing. The battery module includes the plurality of secondary batteries, and the lug is disposed on the module frame disposed on the outer periphery of the plurality of secondary batteries. The fixing casing includes the fixing beams and the limiting space. The plurality of limiting holes are disposed on the fixing beam. The clamping mechanism in each of the limiting holes can fix the lug to the fixing beam. When the battery module is located within the limiting space, the lug on the module frame is fixed by the plurality of clamping mechanisms. In addition, the plurality of clamping mechanisms are spaced apart, so the clamping operations among the plurality of clamping mechanisms will not be affected each other, facilitating the plurality of clamping mechanisms to fix different positions of the lug respectively; therefore the fixing effect of the clamping mechanism can be effectively improved, the stability of the relative position between the lug and the fixing beam can be ensured, thereby the structural strength of the entire battery pack can be improved.

### DESCRIPTION OF THE DRAWINGS

The features, advantages, and technical effects of the exemplary embodiments of this disclosure will be described below with reference to the accompanying drawings, which are not drawn to actual scale.
Fig. 1 is a schematic structural view of a battery pack according to an embodiment of this disclosure;
Fig. 2 is an exploded schematic structural view of a battery pack according to an embodiment of this disclosure;
Fig. 3 is a cross-sectional view of a battery pack according to an embodiment of this disclosure;
Fig. 4 is a schematic structural view of a battery module of a battery pack according to an embodiment of this disclosure;
Fig. 5 is a partial cross-sectional view of a side plate of a battery module of a battery pack according to an embodiment of this disclosure;
Fig. 6 is a schematic structural view of a fixing casing of a battery pack according to an embodiment of this disclosure;
Fig. 7 is a schematic structural view of a clamping mechanism of a battery pack according to an embodiment of this disclosure;
Fig. 8 is a schematic structural view of a fixing bracket of a clamping mechanism of a battery pack according to an embodiment of this disclosure;
Fig. 9 is a schematic structural view of Fig. 8 in another view direction; and
Fig. 10 is a schematic structural view of a lifting bracket of a clamping mechanism of a battery pack according to an embodiment of this disclosure.

Description of Reference Numerals:
10: battery module;
11: secondary battery;
12: module frame; 110: side plate; 111: main plate body; 111a: first sub-portion; 111b: second sub-portion; 112: connecting plate body; 113: first main plate; 114: first connecting plate; 115: second main plate; 116: second connecting plate; 120: lug; 130: end plate; 20: fixing casing;
210: fixing beam; 210a: first fixing beam; 210b: second fixing beam; 211: limiting hole; 212: pressing beam; 212a: second adjusting hole; 213: support plate; 214: first clamping beam 215; second clamping beam; 216: fixing hole;
220: fixing plate;
230: bottom plate;
30: clamping mechanism;
300: fixing bracket; 310: side wall; 311: main body portion; 312: elastic portion; 313: connecting portion; 314: spacer; 320: bottom wall; 321: limiting portion; 321a: second guide surface; 322: receding hole; 323: third adjusting hole; 330: first buckle portion; 331: first guide surface; 340: second buckle portion; 341: stop portion; 350: reinforcing plate;
400: lifting bracket; 410: buckle wall; 411: buckle groove; 412: first adjusting hole; 420: first wall portion; 430: second wall portion; 440: first pressing arm; 450: second pressing arm;
500: adjusting column;
X: length direction;
Y: width direction; and
Z: height direction.

### DETAILED DESCRIPTION

Features and exemplary embodiments of various aspects of this disclosure are described in detail below. In the following detailed description, numerous specific details are set forth, to provide comprehensive understanding of this disclosure. However, for those skilled in the art, it will be apparent to that this disclosure may be practiced without some of the specific details. The following description of the embodiments is merely to provide a better understanding of this disclosure by illustrating examples of this disclosure. In the drawings and the following description, at least some of the known structures and techniques are not shown, to avoid unnecessarily obscuring this disclosure; for clarity, the size of some of the structures may be enlarged. In addition, features, structures, or characteristics described hereinafter may be combined in any suitable manner in one or more embodiments.

In the description of this disclosure, it should be stated, unless otherwise specified, "a plurality of' refers to two or more; and the directions or positional relationships indicated by the terms such as "upper", "lower", "left", "right", "inner", "outside" and the like, are only for the convenience of describing this disclosure and simplifying the description, and do not mean or imply that the involved device or element must have a specific orientation or must be configured or operated in the specific orientation, therefore, they cannot be understood as limiting this disclosure. In addition, the terms "first", "second" and the like are only used for descriptive purposes, and should not be interpreted as indicating or implying relative importance.

The orientation terms appearing in the following description refer to the directions shown in the drawings, and are not intended to limit the specific structure of this disclosure. In the description of this disclosure, it should also be stated, unless otherwise specified and limited, the terms "installed", "connected to", "connected with" or the like should be understood in a broad sense. For example, a connection may refer to fixed connection or disassembly connection; or may refer to integral connection; or may refer to direct connection or indirect connection. For the ordinary person skilled in the art, the specific meanings of the above terms in this disclosure may be understood according to specific situations.

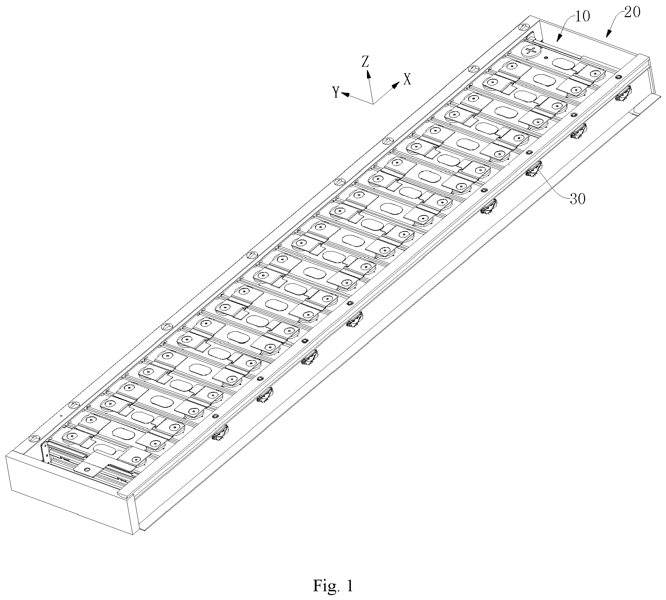

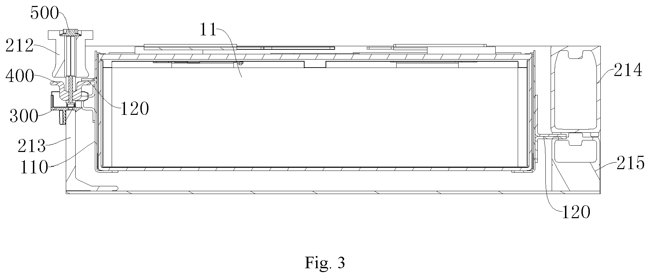

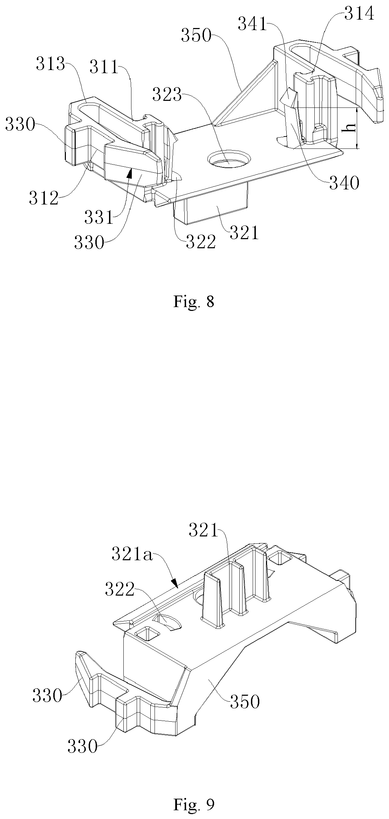

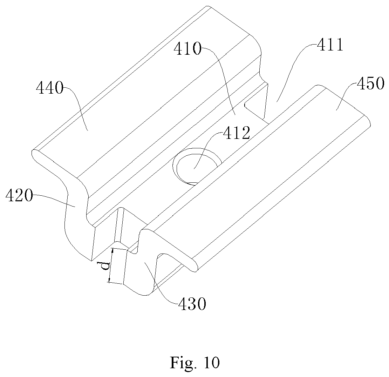

In order to better understand this disclosure, a battery pack and a device using the battery pack according to embodiments of this disclosure will be described in detail below with reference to Figs. 1 to 10.

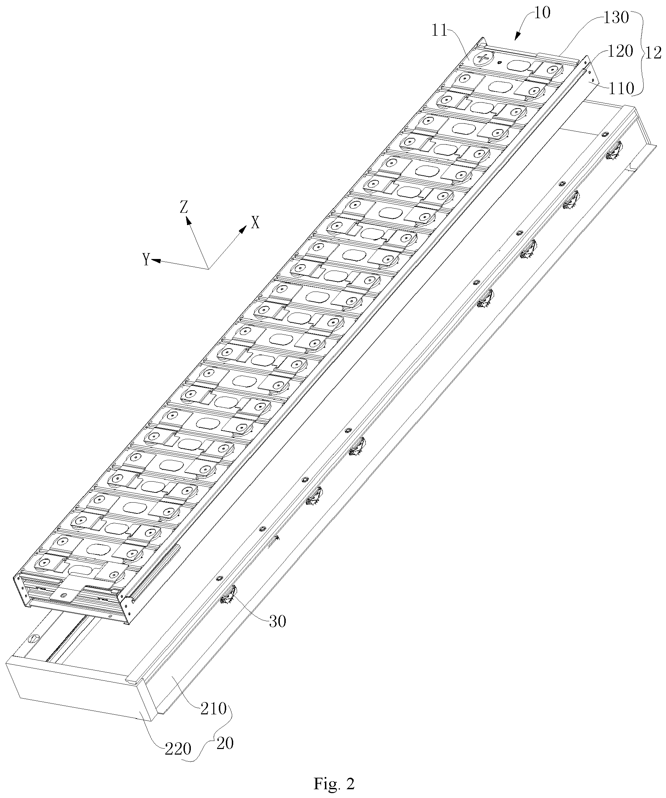

Please refer to Figs. 1 to 6 together. Fig. 1 is a schematic structural view of a battery pack according to an embodiment of this disclosure, and Fig. 2 is an exploded structural view of Fig. 1. In the battery pack according to the embodiment of this disclosure, the battery pack includes: a battery module 10, including a plurality of secondary batteries 11 and a module frame 12 disposed on an outer periphery of the plurality of secondary batteries 11, wherein a lug 120 is provided on a surface of the module frame 12 away from the batteries 11; and a fixing casing 20, including two fixing beams 210 which are spaced apart and a limiting space which is located between the fixing beams 210 and used to accommodate the battery module 10, wherein a plurality of limiting holes 211 which are spaced apart are provided on at least one of the fixing beams 210, and a clamping mechanism 30 is provided in the limiting hole 211 to fix the lug 120 between the clamping mechanism 30 and the fixing beam 210.

In the battery pack according to this disclosure, the battery pack includes the battery module 10 and the fixing casing 20. The battery module 10 includes the plurality of secondary batteries 11, and the lug 120 is disposed on the module frame 12 disposed on the outer periphery of the plurality of secondary batteries 11. The fixing casing 20 includes the fixing beams 210 and the limiting space. The plurality of limiting holes 211 are disposed on the fixing beam 210. The clamping mechanism 30 in each of the limiting holes 211 can fix the lug 120 to the fixing beam 210. When the battery module 10 is located within the limiting space, the lug 120 on the module frame 12 is fixed by the plurality of clamping mechanisms 30. In addition, the plurality of clamping mechanisms 30 are spaced apart, so the clamping operations among the plurality of clamping mechanisms 30 will not be affected each other, facilitating the plurality of clamping mechanisms 30 to fix different positions of the lug 120 respectively; therefore, the fixing effect of the clamping mechanism 30 can be effectively improved, the stability of the relative position between the lug 120 and the fixing beam 210 can be ensured, thereby the structural strength of the entire battery pack can be improved.

The battery module 10 may be disposed in a variety of manners. For example, the plurality of secondary batteries 11 are arranged in rows and in columns within the module frame 12; alternatively, the plurality of secondary batteries 11 are arranged side by side within the module frame 12 along a length direction (X direction in Fig. 1) of the battery pack.

The module frame 12 may be disposed in a variety of manners. For example, please also refer to Fig. 2, the module frame 12 includes two end plates 130 which are oppositely disposed and two side plates 110 which are connected between the two end plates 130 and which are oppositely disposed, and the two side plates 110 and the two end plates 130 are alternately disposed and connected with each other to enclose an accommodating cavity for accommodating the secondary batteries 11. Alternatively, the module frame 12 includes two end plates 130, the plurality of secondary batteries 11 are located between the two end plates 130, and the module frame 12 further includes a band surrounding the outer peripheries of the two end plates 130 and the plurality of secondary batteries 11.

The disposing position of the lug 120 is not limited. When the module frame 12 includes the two end plates 130 and the two side plates 110, the lug 120 may be disposed outside any one of the end plates 130 and/or any one of the side plates 110. When the module frame 12 includes the two end plates 130 and the band, the lug 120 may be disposed outside any one of the end plates 130.

In some embodiments, the module frame 12 includes two end plates 130 and two side plates 110, and the lug 120 is disposed outside any one of the side plates 110. In these optional embodiments, the plurality of secondary batteries 11 are located between the two side plates 110, and the lug 120 is disposed on an outer surface of at least one side plate 110 facing away from the secondary battery 11. The lug 120 is disposed on the side plate 110, and the side plate 110 is disposed correspondingly to the plurality of secondary batteries 11. When the plurality of secondary batteries 11 are arranged within the module frame 12 side by side along the length direction of the battery pack, even if the number of secondary batteries 11 is large and an ultra-long module is formed, the battery module 10 can still be stably fixed within the fixing casing 20 by the lug 120 disposed outside the side plate 110, and the structural strength of the battery pack can be ensured.

The number of the lug 120 disposed outside the module frame 12 is not limited. When the module frame 12 includes the two side plates 110 and the two end plates 130, at least one or two or more of the two side plates 110 and the two end plates 130 is/are provided with the lug(s) 120. When the module frame 12 includes the two end plates 130 and the band, one or two of the two end plates 130 is/are provided with the lug(s) 120.

In some embodiments, the module frame 12 includes two side plates 110 and two end plates 130. The two side plates 110 are both provided with the lugs 120, and the lugs 120 extend along the length direction, so that the two side plates 110 can both be fixed to the fixing beam 210 by the lugs 120.

In some embodiments, the side plate 110 includes a main plate body 111 and connecting plate bodies 112 located at two ends of the main plate body 111. The main plate body 111 is connected to the end plate 130 by the connecting plate bodies 112, and the lug 120 is disposed on the main plate body 111.

The lug 120 may be disposed in a variety of manners. The lug 120 may be directly welded to the module frame 12.

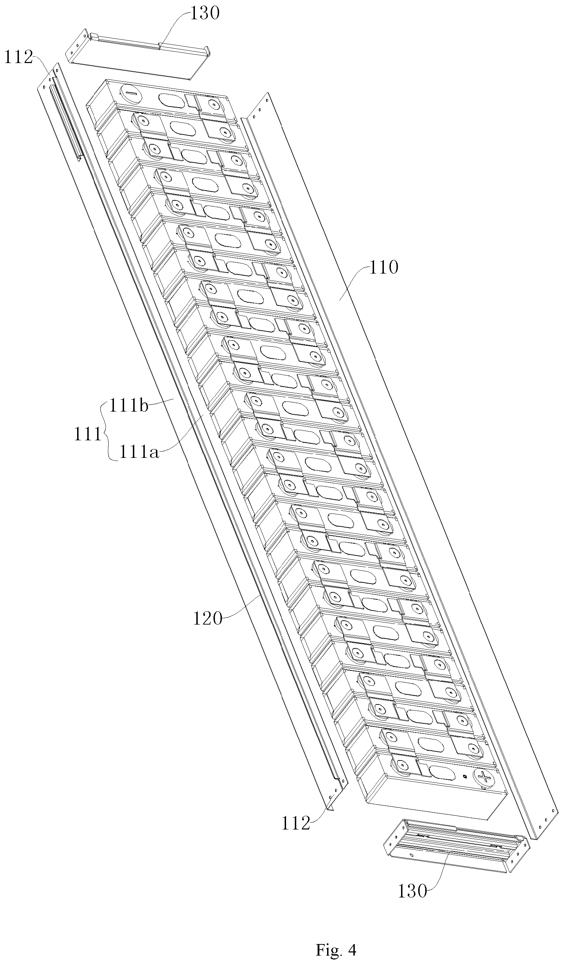

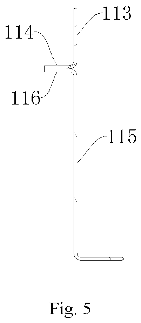

Alternatively, please also refer to Figs. 4 and 5. In other optional embodiments, when the lug 120 is disposed on the side plate 110, the main plate body 111 includes a first sub-portion 111a and a second sub-portion 111b which are arranged separately along a height direction (Z direction in Fig. 1) of the battery pack. The first sub-portion 111a includes a first main plate 113 and a first connecting plate 114 which intersect with each other, and the second sub-portion 111b includes a second main plate 115 and a second connecting plate 116 which intersect with each other, the first connecting plate 114 and the second connecting plate 116 overlap each other to form the lug 120.

In these optional embodiments, the lug 120 is formed by overlapping the first connecting plate 114 and the second connecting plate 116, the first connecting plate 114 and the first main plate 113 are integrally formed, and the second connecting plate 116 and the second main plate 115 are integrally formed; the connection strength between the lug 120 and the module frame 12 can be improved, and thereby the structural strength of the entire battery pack can be improved.

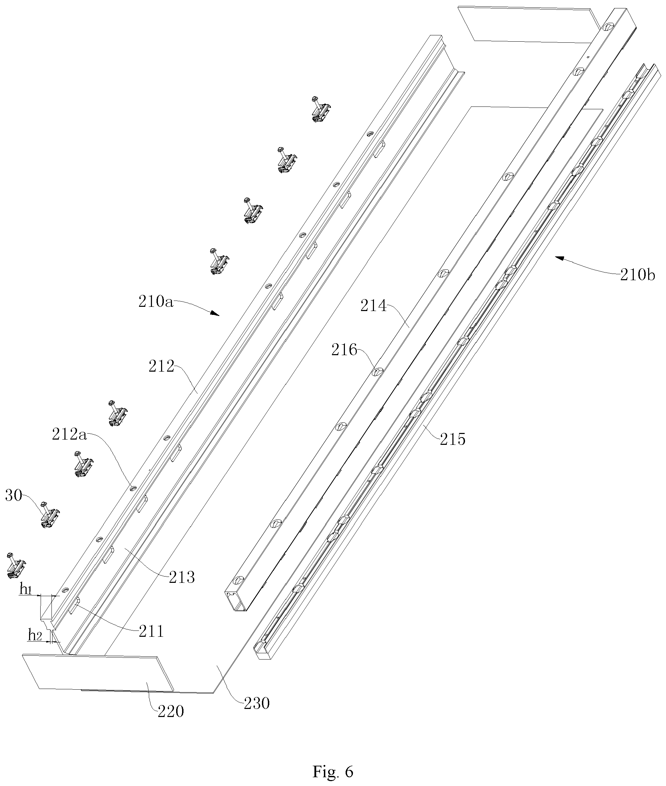

Please also refer to Fig. 6, the fixing casing 20 may be disposed in a variety of manners, and the fixing beam 210 may be a cross beam, a longitudinal beam or a reinforced beam of the fixing casing.

For example, the two fixing beams 210 are a first fixing beam 210a and a second fixing beam 210b respectively, and when there are two lugs 120, the first fixing beam 210a and the second fixing beam 210b fix the two lugs 120 respectively. The clamping mechanism 30 is disposed on the first fixing beam 210a.

The first fixing beam 210a may be disposed in a variety of manners. For example, the first fixing beam 210a is in a shape of plate, the limiting holes 211 are disposed on the plate-shaped fixing beam 210, and the clamping mechanism 30 fixes the lug 120 between the clamping mechanism 30 and an inner wall of the first fixing beam 210a facing the limiting hole 211.

Alternatively, in other optional embodiments, the first fixing beam 210a includes a pressing beam 212 and a support plate 213 which are successively arranged in the height direction, the limiting holes 211 are disposed on the support plate 213, and an extension distance h1 of the pressing beam 212 along a width direction (Y direction in Fig. 1) of the battery pack is greater than an extension thickness h2 of the support plate 213 along the width direction, so as to form a pressing surface on a wall portion of the pressing beam 212 facing the support plate 213, and the clamping mechanism 30 fixes the lug 120 between the clamping mechanism 30 and the pressing surface. By providing the pressing surface, the contact area between the lug 120 and the first fixing beam 210a can be increased, the fixing effect can be improved, and the structural strength of the battery pack can be further ensured.

The second fixing beam 210b may be disposed in a variety of manners, and the second fixing beam 210b may be disposed in the same manner as the first fixing beam 210a.

Alternatively, in other optional embodiments, the second fixing beam 210b includes a first clamping beam 214 and a second clamping beam 215 which are successively arranged along the height direction of the battery pack, to fix at least one lug 120 between the first clamping beam 214 and the second clamping beam 215.

In these optional embodiments, the disposing manner of the second fixing beam 210b is different from that of the first fixing beam 210a, and the second fixing beam 210b fixes the lug 120 by the first clamping beam 214 and the second clamping beam 215, and therefore has a simpler structure.

The first clamping beam 214 and the second clamping beam 215 may fix the lug 120 in a variety of manners. In some optional embodiments, a fixing hole 216 is provided on at least one of the first clamping beam 214 and the second clamping beam 215, so that a fixing member can pass through the fixing hole 216 and fix the lug 120.

The fixing casing 20 may be disposed in a variety of manners. For example, the fixing casing 20 also includes two fixing plates 220 which are oppositely disposed along the length direction. The two fixing plates 220 and the two fixing beams 210 are alternately disposed and connected with each other along a circumferential direction of the fixing casing 20 to enclose a limiting space. The two fixing plates 220 and the two fixing beams 210 respectively limit the battery module 10 in four directions, the stability of the relative position between the fixing casing 20 and the battery module 10 can be further improved, and the structural strength of the battery pack can be improved.

In some optional embodiments, the fixing casing 20 further includes a bottom plate 230. The two fixing plates 220 and the two fixing beams 210 are connected to a peripheral side of the bottom plate 230, and the two fixing plates 220, the two fixing beams 210 and the bottom plate 230 together encloses the limiting space.

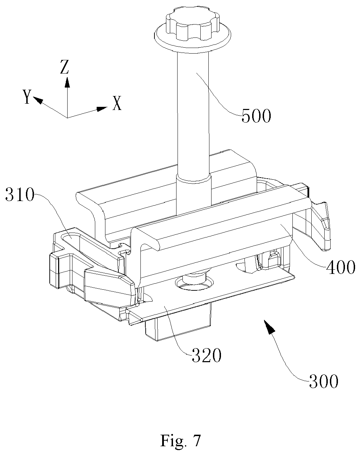

Please refer to Figs. 7 to 10 together. The clamping mechanism 30 may be disposed in a variety of manners. In some optional embodiments, the clamping mechanism 30 includes: a fixing bracket 300, including two side walls 310 which are oppositely disposed along a length direction (X direction in Fig. 7) of the clamping mechanism 30, a bottom wall 320 which is connected between two adjacent side walls 310, and a buckle space between the two adjacent side walls 310, wherein a first buckle portion 330 is provided on an outer surface of the side wall 310 facing away from the buckle space so that the fixing bracket 300 is clamped to the limiting hole 211 by the first buckle portion 330, and second buckle portions 340 which are spaced apart are provided within the buckle space; and a lifting bracket 400 including a buckle wall 410, the lifting bracket 400 being clamped between the two second buckle portions 340 by the buckle wall 410.

In these optional embodiments, the fixing bracket 300 is clamped within the limiting hole 211 by the first buckle portion 330, and the lifting bracket 400 is clamped between the two second buckle portions 340 of the fixing bracket 300 by the buckle wall 410, so that the clamping mechanism 30 fixes the lug 120 within the limiting hole 211 by the lifting bracket 400. The clamping mechanism 30 is clamped to the limiting hole 211 by the fixing bracket 300 and fixes the lug 120 by the lifting bracket 400, so the fixing bracket 300 and the lifting bracket 400 will not affect each other, not only the stability of the relative position between the clamping mechanism 30 and the fixing beam 210 can be improved, but also the stability of the relative position between the lug 120 and the lifting bracket 400 as well as the fixing beam 210 can be improved.

The second buckle portion 340 may be disposed in a variety of manners. For example, the second buckle portion 340 is adapted to match the buckle wall 410 so that the buckle wall 410 can be stably clamped to the second buckle portion 340.

In other optional embodiments, a stop portion 341 is provided at a free end of the second buckle portion 340 away from the bottom wall 320, and a distance h from the stop portion 341 to the bottom wall 320 is greater than an extension thickness d of the buckle wall 410 along a height direction (Z direction in Fig. 7) of the clamping mechanism 30, so that the lifting bracket 400 is disposed to be movable along the height direction.

In these optional embodiments, the lifting bracket 400 is movable along the height direction, facilitating adjustment of the relative position of the lifting bracket 400 and the limiting hole 211. Therefore, even if there is a manufacture error of the lug 120 which results in different thicknesses of the lug 120, the stability of the relative position between the lug 120 and the fixing beam 210 can be ensured by adjusting the position of the lifting bracket 400.

The second buckle portion 340 may be directly disposed on an inner surface of the side wall 310; alternatively, the second buckle portion 340 and the side wall 310 are spaced apart, so that a receding space is formed between the free end of the second buckle portion 340 and the side wall 310, the second buckle portion 340 is deformable, and the distance between the two opposite second buckle portions 340 is variable, facilitating clamping the buckle wall 410 between the two second buckle portions 340.

Further, a receding hole 322 is provided on the bottom wall 320, and the second buckle portion 340 is disposed on a side of the receding hole 322 close to the side wall 310. The receding hole 322 is provided to give way to the deformation of the second buckle portion 340.

The fixing bracket 300 may be clamped in the limiting hole 211 in a variety of manners. In some optional embodiments, the side wall 310 includes a main body portion 311 and an elastic portion 312 which are spaced apart in the length direction and a connecting portion 313 which connects the main body portion 311 and the elastic portion 312, the main body portion 311 is connected to the bottom wall 320, and the first buckle portion 330 is disposed on an outer surface of the elastic portion 312 facing away from the main body portion 311.

In these optional embodiments, the side wall 310 of the fixing bracket 300 includes the main body portion 311, the elastic portion 312 and the connecting portion 313. The main body portion 311 and the elastic portion 312 are spaced apart along the length direction. One end of the elastic portion 312 is connected to the main body portion 311 by the connecting portion 313, and the other end of the elastic portion 312 is suspended. The relative position between the main body portion 311 and the elastic portion 312 is variable, that is, the length of the fixing bracket 300 is variable. By changing the relative position between the main body portion 311 and the elastic portion 312, the fixing bracket 300 can be clamped within the limiting hole 211, and the resilient force of the elastic portion 312 can ensure that the fixing bracket 300 is stably located within the limiting hole 211.

The first buckle portion 330 may be disposed in a variety of manners. For example, two first buckle portions 330 are correspondingly disposed outside one side wall 310, and the two first buckle portions 330 are spaced apart along a width direction (Y direction in Fig. 7) so that a portion of the fixing beam 210 on the peripheral side of the limiting hole 211 is limited to be located between the two first buckle portions 330.

The two first buckle portions 330 disposed outside the same side wall 310 may be disposed in same or different manner. Preferably, the first buckle portion 330 disposed on the suspended end of the elastic portion 312 includes a first guide surface 331, that is, the first buckle portion 330 disposed at an end of the elastic portion 312 away from the connecting portion 313 includes the first guide surface 331, so that the first buckle portion 330 passes through the limiting hole 211 by the first guide surface 331, so as to assemble the clamping mechanism 30 within the limiting hole 211.

The fixing bracket 300 may be clamped to the limiting hole 211 in a variety of manners. In other optional embodiments, a limiting portion 321 is provided on an outer surface of the bottom wall 320 facing away from the buckle space, to provide a limiting force to the fixing bracket 300 located within the limiting hole 211 by the limiting portion 321. By providing the limiting portion 321, the stability of the relative position between the fixing bracket 300 and the fixing beam 210 can be further improved.

The limiting portion 321 may be disposed in a variety of manners. For example, the number of the limiting portion 321 is one. Alternatively, the number of the limiting portion 321 is two, and the two limiting portions 321 are spaced apart along the width direction, so that at least portion of the fixing beam 210 on the peripheral side of the limiting hole 211 is limited to be located between the two limiting portions 321, and thereby the stability of the relative position between the fixing beam 210 and the fixing bracket 300 can be further improved.

The two limiting portions 321 may be disposed in same or different manners. For example, one of the limiting portions 321 is provided with a second guide surface 321a, so that the fixing bracket 300 can pass the limiting portion 321 through the limiting hole 211 by the second guide surface 321a on the limiting portion 321.

The buckle wall 410 may be clamped between the two second buckle portions 340 in a variety of manners. For example, the buckle wall 410 is directly clamped between the two second buckle portions 340. Alternatively, buckle grooves 411 are provided on two sides of the buckle wall 410 in the length direction, and the buckle wall 410 is clamped between the two second buckle portions 340 by the buckle grooves 411. The buckle grooves 411 is provided to give way to the second buckle portion 340, so that the buckle wall 410 can have a longer extension distance in the length direction. The buckle wall 410 can be prevented from shaking within the buckle space, and even if the length of the buckle wall 410 in the length direction is relatively long, the buckle wall 410 can still be fastened and connected with the second buckle portion 340 each other by the buckle grooves 411.

A spacer 314 is also provided on the side wall 310. The spacer 314 is disposed between the side wall 310 and the second buckle portion 340, so as to limit the position of the second buckle portion 340 and prevent damage or even breakage of the second buckle portion 340 caused by excessive deformation of the second buckle portion 340. Optionally, the spacer 314 is shaped to adapt the buckle groove 411, so as to prevent the buckle wall 410 from shaking within the buckle space.

The lifting bracket 400 may be disposed in a variety of manners. In some optional embodiments, the lifting bracket 400 includes a first wall portion 420 and a second wall portion 430 which are respectively connected to two opposite sides of the buckle wall 410 in the width direction, so that the lifting bracket 400 fixes the lug 120 within the limiting hole 211 by the first wall portion 420 and the second wall portion 430.

In order to further increase the contact area between the lifting bracket 400 and the lug 120, in some optional embodiments, an end of the first wall portion 420 away from the buckle wall 410 is further connected with a first pressing arm 440, and the first pressing arm 440 is formed by extending from the first wall portion 420 in a direction away from the second wall portion 430; and/or, an end of the second wall portion 430 away from the buckle wall 410 is also connected with a second pressing arm 450, and the second pressing arm 450 is formed by extending from the second wall portion 430 in a direction away from the first wall portion 420.

The relative position of the lifting bracket 400 and the fixing bracket 300 may be adjusted in a variety of manners. In some optional embodiments, the buckle wall 410 is provided with a first adjusting hole 412 penetrating therethrough, and the pressing beam 212 is provided with a second adjusting hole 211 disposed at a position corresponding to the limiting hole 211, so that an adjusting column 500 can pass through the first adjusting hole 412 and the second adjusting hole 212a and adjust the relative position of the lifting bracket 400 and the fixing bracket 300.

In these optional embodiments, the adjusting column 500 can penetrate through the first adjusting hole 412 and the second adjusting hole 212a, thereby adjusting the relative position of the lifting bracket 400 and the fixing bracket 300, further adjusting the relative position of the lifting bracket 400 and the pressing beam 212. The adjusting column 500 may adjust the position of the lifting bracket 400 by the first adjusting hole 412 and the second adjusting hole 212a in a variety of manners. For example, the adjusting column 500 is provided with an external thread, and the first adjusting hole 412 and the second adjusting hole 212a are provided with internal threads, and thereby the position of the lifting bracket 400 can be adjusted by screwing the adjusting column 500.

Further, in some optional embodiments, the bottom wall 320 is provided with a third adjustment hole 323 penetrating therethrough, and the third adjustment hole 323 is disposed at a position corresponding to the first adjustment hole 412, so that the adjustment column 500 can pass through the third adjustment hole 323, and the adjustment distance can be increased.

The fixing bracket 300 may be disposed in a variety of manners. For example, in some optional embodiments, a reinforcing plate 350 is connected between the bottom wall 320 and the side wall 310 of the fixing bracket 300, so as to improve the structural strength of the fixing bracket 300 by the reinforcing plate 350.

This disclosure also provides a device including the battery pack according to this disclosure. The battery pack may be used as a power source of the device, or may be used as the energy storage unit of the device. An example of the device may be a ship, an airplane, an energy storage cabinets, a vehicle, or the like. The vehicle may be a new energy vehicle, which includes, but is not limited to, a pure electric vehicle, a hybrid electric vehicle, a plug-in hybrid electric vehicle, an electric bicycle, an electric scooter, an electric golf cart, an electric truck, an electric train, and the like. The vehicle includes a drive motor which is electrically connected to the battery pack, the battery pack provides electric energy, and the drive motor is connected to the wheels on the vehicle by a transmission mechanism to drive the vehicle to travel.

It should be understood by those skilled in the art that the above-mentioned embodiments are all exemplary rather than restrictive. Different technical features appearing in different embodiments can be combined to achieve beneficial effects. Those skilled in the art should be able to understand and implement other modified embodiments of the disclosed embodiments on the basis of studying the drawings, description, and claims. In the claims, the term "comprising" does not exclude other devices or steps; terms such as "a", "an" and "the" are not intended to refer to only a singular entity, but include a description of a plurality of entities, and can be used interchangeably with "one entity or the plurality of entities"; the terms "first" and "second" are intended to indicate names rather than to indicate any specific order. Any reference numerals in the claims should not be construed as limiting the scope of protection. The functions of multiple portions appearing in the claims can be achieved by a single hardware or software module. The appearance of certain technical features in different dependent claims does not mean that these technical features cannot be combined to achieve beneficial effects.

## Claims

1. A battery pack, comprising:
a battery module, comprising a plurality of secondary batteries and a module frame disposed on an outer periphery of the plurality of secondary batteries, wherein a lug is provided on a surface of the module frame away from the secondary batteries; and
a fixing casing, comprising two fixing beams which are spaced apart and a limiting space which is located between the two fixing beams and used to accommodate the battery module, wherein a plurality of limiting holes which are spaced apart are provided on at least one of the fixing beams, and a clamping mechanism is disposed within the limiting hole to fix the lug between the clamping mechanism and the fixing beam.

2. The battery pack of claim 1, wherein the clamping mechanism comprises:
a fixing bracket, comprising side walls disposed oppositely along a length direction of the clamping mechanism, a bottom wall connected between two adjacent side walls, and a buckle space located between the two adjacent side walls, wherein a first buckle portion is provided on an outer surface of the side wall facing away from the buckle space, so that the fixing bracket is clamped to the limiting hole by the first buckle portion, and second buckle portions which are spaced apart are provided within the buckle space; and
a lifting bracket, comprising a buckle wall, the lifting bracket being clamped between two second buckle portions by the buckle wall.

3. The battery pack according to claim 2, wherein a stop portion is provided at a free end of the second buckle portion away from the bottom wall, and a distance from the stop portion to the bottom wall is greater than an extension thickness of the buckle wall along a height direction of the clamping mechanism, so that the lifting bracket is disposed to be movable along the height direction.

4. The battery pack according to claim 3, wherein the second buckle portion and the side wall are spaced apart.

5. The battery pack according to any one of claims 3 to 4, wherein a receding hole is provided on the bottom wall, and the second buckle portion is disposed on a side of the receding hole close to the side wall.

6. The battery pack according to any one of claims 2 to 5, wherein the side wall comprises a main body portion and an elastic portion which are spaced apart in the length direction and a connecting portion which connects the main body portion and the elastic portion, the main body portion is connected to the bottom wall, and the first buckle portion is disposed on an outer surface of the elastic portion facing away from the main body portion.

7. The battery pack according to claim 6, wherein two first buckle portions are disposed outside the same side wall, and the two first buckle portions are spaced apart along a width direction of the battery pack outside the same side wall, so that a portion of the fixing beam on the peripheral side of the limiting hole is limited to be located between the two first buckle portions.

8. The battery pack according to claim 7, wherein of the two first buckle portions disposed outside the same side wall, the first buckle portion disposed at a suspended end of the elastic portion comprises a first guide surface.

9. The battery pack according to any one of claims 2 to 8, wherein a limiting portion is provided on an outer surface of the bottom wall facing away from the buckle space, so as to provide a limiting force to the fixing bracket located within the limiting hole by the limiting portion.

10. The battery pack according to claim 9, wherein the number of the limiting portion is two, and two limiting portions are spaced apart along a width direction of the battery pack, so that at least portion of the fixing beam on the peripheral side of the limiting hole is limited to be located between the two limiting portions.

11. The battery pack according to any one of claims 2 to 10, wherein buckle grooves are provided on two sides of the buckle wall in the length direction, and the buckle wall is clamped between the two second buckle portions by the buckle grooves.

12. The battery pack according to claim 11, wherein,
the lifting bracket comprises a first wall portion and a second wall portion which are respectively connected to on two opposite sides of the buckle wall in a width direction of the clamping mechanism;
an end of the first wall portion away from the buckle wall is further connected with a first pressing arm, and the first pressing arm is formed by extending from the first wall portion in a direction away from the second wall portion;
and/or, an end of the second wall portion away from the buckle wall is further connected with a second pressing arm, and the second pressing arm is formed by extending from the second wall portion in a direction away from away from the first wall portion.

13. The battery pack according to any one of claims 11 to 12, wherein,
the fixing beam provided with the clamping mechanism comprises a pressing beam and a supporting plate which are successively arranged in the height direction of the clamping mechanism, the limiting holes are disposed on the supporting plate, and in the width direction of the clamping mechanism, an extension distance of the pressing beam is greater than an extension thickness of the support plate, so as to fix the lug between the pressing beam and the lifting bracket; and
the buckle wall is provided with a first adjusting hole penetrating therethrough, and the pressing beam is provided with a second adjusting hole disposed at a position corresponding to the limiting hole, so that an adjusting column can pass through the first adjusting hole and the second adjusting hole and adjust the relative position of the lifting bracket and the fixing bracket.

14. The battery pack according to any one of claims 2 to 13, wherein the buckle wall is provided with a first adjusting hole penetrating therethrough, and the pressing beam is provided with a second adjusting hole disposed at a position corresponding to the limiting hole, so that an adjusting column can pass through the first adjusting hole and the second adjusting hole and adjust the relative position of the lifting bracket and the fixing bracket.

15. The battery pack according to claim 14, wherein the bottom wall is provided with a third adjusting hole penetrating therethrough, the third adjusting hole is disposed at a position corresponding to the first adjusting hole, so that the adjusting column can also pass through the third adjusting hole.

16. The battery pack according to any one of claims 2 to 15, wherein the side wall is provided with a spacer which limits a position of the second buckle portion, and the spacer is disposed between the side wall and the second buckle portion.

17. The battery pack according to any one of claims 1 to 16, wherein the module frame comprises two side plates which are spaced apart, the secondary batteries are located between the two side plates, and the lug is disposed on an outer surface of at least one of the side plates that is facing away from the secondary batteries.

18. The battery pack according to claim 17, wherein the module frame further comprises two end plates, the side plate comprises a main plate body and connecting plate bodies located at two ends of the main plate body, and the main plate body is connected to the end plates by the connecting plate bodies, and the lug is disposed on the main plate body; and
the main plate body comprises a first sub-portion and a second sub-portion which are separately disposed along a height direction of the battery pack, the first sub-portion comprises a first main plate and a second connecting plate which intersect with each other, the second sub-portion comprises a second main plate and a second connecting plate which intersect with each other, and the first connecting plate and the second connecting plate overlap each other to form the lug.

19. The battery pack according to any one of claims 1 to 18, wherein,
at least two lugs are disposed outside the module frame;
the two fixing beams are a first fixing beam and a second fixing beam respectively, and the clamping mechanism is disposed on the first fixing beam; and
the second fixing beam comprises a first clamping beam and a second clamping beam which are successively disposed along a height direction of the battery pack, so as to fix at least one of the lugs between the first clamping beam and the second clamping beam.

20. The battery pack according to claim 19, wherein,
the first fixing beam comprises a pressing beam and a support plate which are successively disposed in the height direction of the battery pack, and the limiting holes are disposed on the support plate,
an extension distance of the pressing beam in a width direction of the battery pack is greater than an extension thickness of the support plate in the width direction, so as to form a pressing surface on a wall portion of the pressing beam facing the support plate, and the lug is fixed between the clamping mechanism and the pressing surface.

21. The battery pack according to any one of claims 1 to 20, wherein the fixing casing further comprises two fixing plates which are oppositely disposed along a length direction of the battery pack, the two fixing plates and the two fixing beams are alternately disposed and connected with each other along a circumferential direction of the fixing casing to enclose a limiting space.

22. A device using a battery pack, comprising the battery pack according to any one of claims 1 to 21.
